# EUROPEAN PATENT APPLICATION

(11) **EP 4 622 226 A1**
(43) Date of publication of application: **24.09.2025**
(21) Application number: 22968916.1
(22) Date of filing: 22.12.2022
(51) Int. Cl.: H04L 69/22

(54) **DATA TRANSMISSION METHOD AND RELATED APPARATUS**

(71) Applicant: Huawei Technologies Co., Ltd., Shenzhen, Guangdong 518129 (CN)
(72) Inventor: LI, Youyong, Shenzhen, Guangdong 518129 (CN)
(74) Representative: Goddar, Heinz J.
(86) International application number: PCT/CN2022/140886
(87) International publication number: WO 2024/130615

(57) **Abstract**

A data transmission method is applied to implementation of data transmission between communication apparatuses. In the method, when a communication connection established between two communication apparatuses is a data forwarding connection without using a network layer, a structure of a packet exchanged between the communication apparatuses is simplified, the packet does not carry a network layer header, and only a transport layer header and a data link layer header that are used to implement packet transmission are reserved, thereby reducing packet overheads, improving data transmission efficiency, and reducing power consumption of the communication apparatus.

## Description

### TECHNICAL FIELD

This application relates to the field of computer network technologies, and in particular, to a data transmission method and a related apparatus.

### BACKGROUND

In the network communication field, two communication apparatuses that communicate with each other usually need to construct packets according to a predefined transmission protocol and implement data communication through exchanging the packets. The packet exchanged between the communication apparatuses includes valid data that needs to be transmitted between the communication apparatuses and some parameter content specified in a transmission protocol.

Currently, a widely used transmission protocol is the transmission control protocol (Transmission Control Protocol, TCP)/Internet protocol (Internet Protocol, IP) protocol suite. A packet constructed by a communication apparatus according to the TCP/IP protocol suite usually includes valid data, a TCP header, an IP header, and a link layer header. Headers such as a TCP header, an IP header, and a link layer header are used to implement packet transmission between communication apparatuses.

However, in some simple communication scenarios, for the packet exchanged between the communication apparatuses, content in a part of headers in the packet may not play a role in an actual packet transmission process. In other words, this part of content in the packet is redundant content. In this way, when each packet exchanged between the communication apparatuses carries redundant content, a volume of data transmitted between the communication apparatuses increases, thereby reducing a data transmission delay and increasing power consumption overheads of the communication apparatus.

### SUMMARY

This application provides a data transmission method. When a communication connection established between two communication apparatuses is a data forwarding connection without using a network layer, a structure of a packet exchanged between the communication apparatuses is simplified, the packet does not carry a network layer header, and only a transport layer header and a data link layer header that are used to implement packet transmission are reserved, thereby reducing packet overheads, improving data transmission efficiency, and reducing power consumption of the communication apparatus.

A first aspect of this application provides a data transmission method that is applied to a first communication apparatus. The method includes: When a communication connection between the first communication apparatus and a second communication apparatus is a data forwarding connection without using a network layer, the first communication apparatus generates a first packet, where the first packet includes a payload (payload), a transport layer header, and a data link layer header, and the first packet does not include a network layer header. The data forwarding connection without using the network layer may specifically be a peer-to-peer (peer-to-peer, P2P) connection or a star connection.

When the communication connection between the first communication apparatus and the second communication apparatus is the data forwarding connection without using the network layer, the packet exchanged between the first communication apparatus and the second communication apparatus does not need to be forwarded based on an IP address in the network layer header.

Then, the first communication apparatus sends the first packet to the second communication apparatus over the foregoing communication connection. Because the communication connection between the first communication apparatus and the second communication apparatus is the data forwarding connection without using the network layer, packet transmission can also be implemented even if the first packet does not include the network layer header, that is, does not include IP addresses of the first communication apparatus and the second communication apparatus.

In this solution, when a communication connection established between two communication apparatuses is a data forwarding connection without using a network layer, a structure of a packet exchanged between the communication apparatuses is simplified, the packet does not carry a network layer header, and only a transport layer header and a data link layer header that are used to implement packet transmission are reserved, thereby reducing packet overheads, improving data transmission efficiency, and reducing power consumption of the communication apparatus.

In a possible implementation, the transport layer header includes a plurality of the following fields: a version number, a header length, a source port, a destination port, a sequence number, an acknowledgment sequence number, and a total packet length.

In this solution, some existing fields are reserved in the transport layer header, to effectively ensure reliable transmission of the packet.

In a possible implementation, the data link layer header includes a plurality of the following fields: an upper layer protocol type, a source media access control (Media Access Control, MAC) address, and a destination MAC address; and the upper layer protocol type indicates a protocol type corresponding to the transport layer header.

In this solution, the upper layer protocol type is carried in the data link layer header to indicate a protocol corresponding to the transport layer header, so that a communication apparatus at a receive end can select, based on the upper layer protocol type, a corresponding protocol processing module to perform packet processing, thereby ensuring normal packet receiving, sending, and processing.

In a possible implementation, a header in the first packet does not include the following fields: a source Internet protocol IP address, a destination IP address, a checksum, and a time to live (time to live, TTL).

Specifically, because there is no need to use a plurality of intermediate apparatuses to forward the first packet, forwarding of the first packet no longer depends on a source IP address and a destination IP address. In addition, because the connection between the first communication apparatus and the second communication apparatus is usually short range communication, reliability of the first packet in a transmission process can be ensured. Therefore, the first packet does not need to carry a checksum to check accuracy of the first packet. In addition, because there is no intermediate apparatus or only one intermediate apparatus between the first communication apparatus and the second communication apparatus, the first packet does not need to carry the TTL to avoid cyclic reception and transmission of the packet in a network.

In a possible implementation, the communication connection between the first communication apparatus and the second communication apparatus is identified by using a MAC address and a port number of the first communication apparatus and a MAC address and a port number of the second communication apparatus.

In this solution, a connection between communication apparatuses is identified by using MAC addresses and port numbers of the communication apparatuses, to implement replacement for an IP address. In this way, normal establishment of the communication connection can be ensured even when an IP address is not used for communication.

In a possible implementation, that the first communication apparatus generates the first packet includes: a first transport layer module in the first communication apparatus generates the payload, where the first transport layer module is a protocol processing module corresponding to the transport layer header; and the first transport layer module encapsulates the transport layer header and the data link layer header outside the payload based on the communication connection, to obtain the first packet.

In this solution, the first transport layer module is responsible for encapsulation of both the transport layer header and the data link layer header, to bypass the data link layer, thereby reducing a program processing procedure, finally reducing a data transmission delay, and reducing processing resource overheads of the communication apparatus.

In a possible implementation, the method further includes: Based on a network type of an interface that is of the first communication apparatus and that is used to establish the communication connection to the second communication apparatus being a peer-to-peer connection, the first communication apparatus determines that the communication connection between the first communication apparatus and the second communication apparatus is the data forwarding connection without using the network layer.

In a possible implementation, the method further includes: Based on an IP address of the first communication apparatus and an IP address of the second communication apparatus being in a same broadcast domain, the first communication apparatus determines that the communication connection between the first communication apparatus and the second communication apparatus is the data forwarding connection without using the network layer.

In this solution, the communication apparatus selects, based on a current service scenario, a simplified protocol to implement packet transmission, thereby effectively reducing packet overheads, improving data transmission efficiency, and reducing power consumption of the communication apparatus.

A second aspect of this application provides a data transmission method, including: When a communication connection between a first communication apparatus and a second communication apparatus is a data forwarding connection without using a network layer, the second communication apparatus receives, over the communication connection, a first packet sent by the first communication apparatus, where the first packet includes a payload, a transport layer header, and a data link layer header, and the first packet does not include a network layer header. The second communication apparatus processes the first packet, to obtain the payload in the first packet.

In a possible implementation, the transport layer header includes a plurality of the following fields: a version number, a header length, a source port, a destination port, a sequence number, an acknowledgment sequence number, and a total packet length.

In a possible implementation, the data link layer header includes a plurality of the following fields: an upper layer protocol type, a source MAC address, and a destination MAC address; and the upper layer protocol type indicates a protocol type corresponding to the transport layer header.

In a possible implementation, a header in the first packet does not include the following fields: a source IP address, a destination IP address, a checksum, and a TTL.

In a possible implementation, the communication connection between the first communication apparatus and the second communication apparatus is identified by using a MAC address and a port number of the first communication apparatus and a MAC address and a port number of the second communication apparatus.

In a possible implementation, that the second communication apparatus processes the first packet specifically includes: a data link layer module in the second communication apparatus transfers the first packet to a second transport layer module in the second communication apparatus according to an upper layer protocol type indicated by the data link layer header, where the second protocol module is a protocol processing module corresponding to the transport layer header; and the second transport layer module decapsulates the first packet, to obtain the payload.

In a possible implementation, that the communication connection between the first communication apparatus and the second communication apparatus is the data forwarding connection without using the network layer specifically includes: a network type of an interface that is of the first communication apparatus and that is used to connect to the second communication apparatus is a peer-to-peer connection.

In a possible implementation, that the communication connection between the first communication apparatus and the second communication apparatus is the data forwarding connection without using the network layer specifically includes: an IP address of the first communication apparatus and an IP address of the second communication apparatus are in a same broadcast domain.

A third aspect of this application provides a communication apparatus. The communication apparatus is a first communication apparatus and includes:
a processing module, configured to generate a first packet, where the first packet includes a payload, a transport layer header, and a data link layer header, and the first packet does not include a network layer header; and
a transceiver module, configured to send the first packet to a second communication apparatus over a communication connection, where the communication connection is a data forwarding connection without using a network layer.

In a possible implementation, the transport layer header includes a plurality of the following fields: a version number, a header length, a source port, a destination port, a sequence number, an acknowledgment sequence number, and a total packet length.

In a possible implementation, the data link layer header includes a plurality of the following fields: an upper layer protocol type, a source media access control MAC address, and a destination MAC address; and the upper layer protocol type indicates a protocol type corresponding to the transport layer header.

In a possible implementation, a header in the first packet does not include the following fields: a source IP address, a destination IP address, a checksum, and a time to live TTL.

In a possible implementation, the communication connection between the first communication apparatus and the second communication apparatus is identified by using a MAC address and a port number of the first communication apparatus and a MAC address and a port number of the second communication apparatus.

In a possible implementation, the processing module is specifically configured to: generate, by using a first transport layer module in the first communication apparatus, the payload, where the first transport layer module is a protocol processing module corresponding to the transport layer header; and encapsulate, by using the first transport layer module, the transport layer header and the data link layer header outside the payload based on the communication connection, to obtain the first packet.

In a possible implementation, the processing module is further configured to: based on a network type of an interface that is of the first communication apparatus and that is connected to the second communication apparatus being a peer-to-peer connection, determine, by the first communication apparatus, that the communication connection between the first communication apparatus and the second communication apparatus is the data forwarding connection without using the network layer.

In a possible implementation, the processing module is further configured to: based on an IP address of the first communication apparatus and an IP address of the second communication apparatus being in a same broadcast domain, determine, by the first communication apparatus, that the communication connection between the first communication apparatus and the second communication apparatus is the data forwarding connection without using the network layer.

A fourth aspect of this application provides a communication apparatus. The communication apparatus is a second communication apparatus and includes:
a transceiver module, configured to: when a communication connection between a first communication apparatus and the second communication apparatus is a data forwarding connection without using a network layer, receive, over the communication connection, a first packet sent by the first communication apparatus, where the first packet includes a payload, a transport layer header, and a data link layer header, and the first packet does not include a network layer header; and
a processing module, configured to process the first packet, to obtain a payload in the first packet.

In a possible implementation, the transport layer header includes a plurality of the following fields: a version number, a header length, a source port, a destination port, a sequence number, an acknowledgment sequence number, and a total packet length.

In a possible implementation, the data link layer header includes a plurality of the following fields: an upper layer protocol type, a source MAC address, and a destination MAC address; and the upper layer protocol type indicates a protocol type corresponding to the transport layer header.

In a possible implementation, a header in the first packet does not include the following fields: a source IP address, a destination IP address, a checksum, and a TTL.

In a possible implementation, the communication connection between the first communication apparatus and the second communication apparatus is identified by using a MAC address and a port number of the first communication apparatus and a MAC address and a port number of the second communication apparatus.

In a possible implementation, the processing module is specifically configured to: transfer, by using a data link layer module in the second communication apparatus, the first packet to a second transport layer module in the second communication apparatus according to an upper layer protocol type indicated by the data link layer header, where the second protocol module is a protocol processing module corresponding to the transport layer header; and decapsulate, by using the second transport layer module, the first packet, to obtain the payload.

In a possible implementation, a network type of an interface that is of the first communication apparatus and that is used to connect to the second communication apparatus is a peer-to-peer connection.

In a possible implementation, an IP address of the first communication apparatus and an IP address of the second communication apparatus are in a same broadcast domain.

A fifth aspect of this application provides a communication apparatus. The communication apparatus includes a memory and a processor. The memory stores code. The processor is configured to execute the code. When the code is executed, the communication apparatus performs the method according to any one of the implementations of the first aspect or the second aspect.

According to a sixth aspect of this application, a computer-readable storage medium is provided. The computer-readable storage medium stores a computer program. When the computer program is run on a computer, the computer is enabled to perform the method in any implementation of the first aspect or the second aspect.

According to a seventh aspect of this application, a computer program product is provided. When the computer program product is run on a computer, the computer is enabled to perform the method in any implementation of the first aspect or the second aspect.

According to an eighth aspect of this application, a chip is provided, including one or more processors. A part or all of the processors are configured to read and execute a computer program stored in a memory, to perform the method in any implementation of the first aspect or the second aspect.

Optionally, the chip further includes a memory, and the memory and the processor are connected to a memory through a circuit or a wire. Optionally, the chip further includes a communication interface, and the processor is connected to the communication interface. The communication interface is configured to receive data and/or information that need/needs to be processed. The processor obtains the data and/or the information from the communication interface, processes the data and/or the information, and outputs a processing result by using the communication interface. The communication interface may be an input/output interface. The method provided in this application may be implemented by one chip, or may be cooperatively implemented by a plurality of chips.

For technical effects brought by any one of the design manners of the second aspect to the eighth aspect, refer to technical effects brought by different implementations of the first aspect. Details are not described herein again.

### BRIEF DESCRIPTION OF DRAWINGS

FIG. 1 is a diagram of a system architecture to which a TCP/IP protocol suite is applied according to an embodiment of this application;
FIG. 2 is a diagram of a structure of a packet generated based on a TCP/IP protocol suite according to an embodiment of this application;
FIG. 3 is a diagram of packet transmission and parsing according to an embodiment of this application;
FIG. 4 is a diagram of a structure of a communication apparatus 101 according to an embodiment of this application;
FIG. 5 is a schematic flowchart of a data transmission method according to an embodiment of this application;
FIG. 6 is a diagram of a structure of a first packet according to an embodiment of this application;
FIG. 7 is a diagram of a structure of a transport layer header according to an embodiment of this application;
FIG. 8 is another diagram of a structure of a transport layer header according to an embodiment of this application;
FIG. 9 is a diagram of a structure of a data link layer header according to an embodiment of this application;
FIG. 10 is a diagram of a system architecture according to an embodiment of this application;
FIG. 11 is a diagram of an implementation architecture according to an embodiment of this application;
FIG. 12 is a diagram of registering a MinTP protocol with a kernel according to an embodiment of this application;
FIG. 13 is an overall schematic flowchart of data transmission according to an embodiment of this application;
FIG. 14 is a schematic flowchart of establishing connections by a communication apparatus according to different protocols according to an embodiment of this application;
FIG. 15 is a schematic flowchart of establishing a connection according to a MinTP protocol according to an embodiment of this application;
FIG. 16 is a schematic flowchart of establishing a connection by exchanging handshake packets between a client and a server according to an embodiment of this application;
FIG. 17 is a schematic flowchart of packet exchange between a client and a server according to an embodiment of this application;
FIG. 18 is another schematic flowchart of data exchange between a client and a server according to an embodiment of this application;
FIG. 19 is a diagram of a structure of a first communication apparatus according to an embodiment of this application;
FIG. 20 is a diagram of a structure of a second communication apparatus according to an embodiment of this application;
FIG. 21 is a diagram of a structure of an execution device according to an embodiment of this application; and
FIG. 22 is a diagram of a structure of a computer-readable storage medium according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application.

In the specification, claims, and accompanying drawings of this application, the terms "first", "second", "third", "fourth", and so on (if existent) are intended to distinguish between similar objects but do not necessarily indicate a specific order or sequence. It should be understood that data termed in such a way are interchangeable in proper circumstances so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

For ease of understanding, the following first describes some technical terms used in embodiments of this application.

### (1) Open system interconnection reference model (Open System Interconnection Reference Model, OSI model)

The OSI model is a conceptual model proposed by the international organization for standardization, and is actually a standard framework of a network that attempts to interconnect various computers in the world. The OSI divides a computer network architecture into seven layers: a physical layer, a data link layer, a network layer, a transport layer, a session layer, a presentation layer, and an application layer. Functions of the seven-layer structure are described as follows:

Physical layer: converts data into electronic signals that can be transmitted through a physical medium, and is equivalent to a porter in a post office.

Data link layer: determines a network medium access manner. Generally, at the data link layer, data is framed, and flow control is processed. The data link layer specifies a topology and provides hardware addressing, and is equivalent to a packing and unpacking worker in the post office.

Network layer: routes use right data through a large-scale network, and is equivalent to a sorting worker in the post office.

Transport layer: provides a reliable connection between terminals, and is equivalent to a messenger in the post office.

Session layer: allows users to use simple and easy-to-remember names to establish connections, and is equivalent to a secretary who receives and sends letters, and writes and opens envelopes in a company.

Presentation layer: negotiates a data exchange format, and is equivalent to an assistant who briefs a boss and writes letters for the boss in the company.

Application layer: is an interface between an application of a user and a network.

### (2) TCP

TCP is a connection-oriented, reliable, and byte stream-based transport layer communication protocol. Specifically, TCP is a transmission protocol designed to provide reliable end-to-end byte streams on unreliable networks.

### (3) IP

IP is a network layer protocol in a TCP/IP architecture. A purpose of IP is to improve network scalability: to first resolve Internet problems and implement interconnection and interworking of large-scale and heterogeneous networks, and second separate a coupling relationship between an upper-layer network application and a lower-layer network technology, thereby facilitating independent development of the top-layer network application and the bottom-layer network technology. According to an end-to-end design principle, IP provides only a connectionless, unreliable, and best-effort data packet transmission service for hosts.

### (4) TCP/IP protocol suite

The TCP/IP protocol suite is actually a set of protocols, such as TCP at the transport layer and IP at the network layer. In the TCP/IP protocol suite, each protocol is responsible for a part of network data transmission, and provides a service in a specific aspect for data transmission in a network.

The TCP/IP protocol suite is developed by using the OSI model as a framework. A hierarchical structure defined by the TCP/IP protocol suite is different from that of the OSI model. Specifically, the hierarchical structure defined by the TCP/IP protocol suite includes an application layer, a transport layer, a network layer, a data link layer, and a physical layer. The application layer defined by the TCP/IP protocol suite is equivalent to integrating the application layer, the presentation layer, and the session layer in the OSI model into a single application layer, so that functions such as data format representation and session establishment are more closely combined with application software.

### (5) Packet header

The packet header is usually referred to as a header for short, and indicates some information segments encapsulated in a header of a packet, to indicate some information needed in a packet transmission process.

### (6) Checksum

The checksum is a field in a network layer header, is calculated based on data content in a packet, and is used to ensure data integrity and accuracy in long range communication.

### (7) Time to live (Time To Live, TTL)

TTL is a field in a network layer header, and is used to specify a maximum quantity of network segments that are allowed to pass through before a packet is discarded by a router. TTL is used to prevent infinite packet transmission and reception on a network.

### (8) User datagram protocol (User Datagram Protocol, UDP)

UDP is a connectionless transport layer protocol, in the OSI model, that provides a simple but unreliable transaction-oriented information transmission service. Like TCP, UDP is used to process data packets. In the OSI model, both UDP and TCP are located at the transport layer, that is, the upper layer of the network layer. UDP has disadvantages of not providing data packet grouping and assembly and being incapable of data packet sorting. In other words, after a packet is sent, it cannot be learned whether the packet arrives securely and completely. UDP is used to support network applications that need to transmit data between computers. Many network applications in a client/server mode, including a network videoconferencing system, need to use the UDP protocol. Currently, many applications support only UDP, such as multimedia data streams. No extra data is generated. Retransmission is not performed even if it is learned that there is a damaged packet. UDP is the best choice when transmission performance rather than transmission integrity is emphasized, for example, audio and multimedia applications. UDP is also a good choice when a data transmission time is short and a previous connection process becomes a main traffic part.

### (9) Media access control (Media Access Control, MAC) address

Each device in a network has a unique network identifier. The network identifier is usually referred to as a MAC address or a network interface card address, and is written in hardware by a network device manufacturer during production.

### (10) Socket (socket)

The socket is abstraction of an endpoint for bidirectional communication between application processes on different hosts on a network. One socket is one end of process communication on the network, and provides a mechanism for a process at the application layer to exchange data by using a network protocol. In terms of a status of the socket, the socket is connected to an application process upstream and a network protocol stack downstream. The socket is an interface for communication between applications through the network protocol and an interface for interaction between an application and the network protocol stack.

### (11) Cookie

The cookie is a piece of data stored on a local terminal of a user. Generally, the cookie is data (usually encrypted data) stored on the local terminal of the user to identify a user identity and trace a session, and is information that is temporarily or permanently stored on a client computer of the user.

Currently, in some simple communication scenarios, for a packet exchanged between communication apparatuses, content in a part of headers in the packet may not play a role in an actual packet transmission process. In other words, this part of content in the packet is redundant content. In this way, when each packet exchanged between the communication apparatuses carries redundant content, a volume of data transmitted between the communication apparatuses increases, thereby reducing a data transmission delay and increasing power consumption overheads of the communication apparatus.

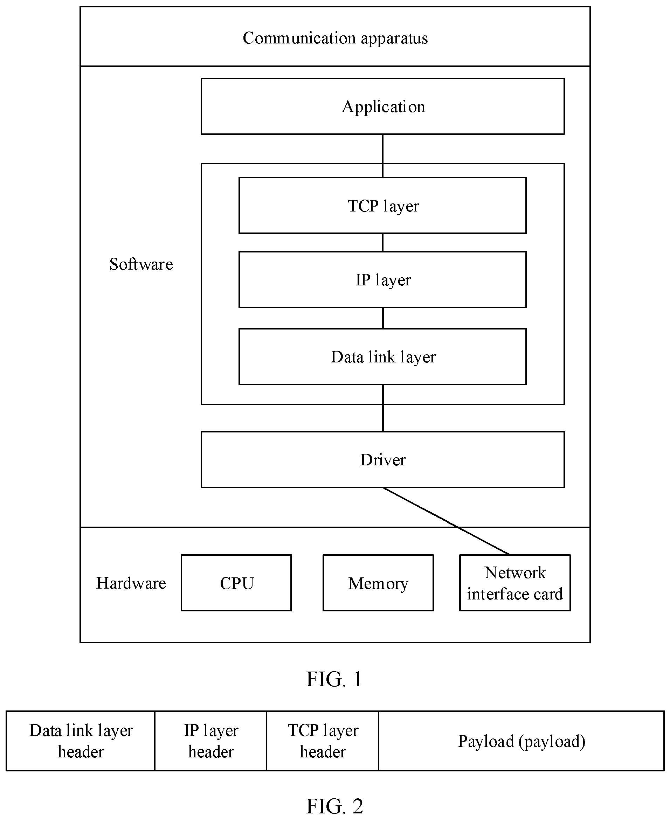

For example, refer to FIG. 1. FIG. 1 is a diagram of a system architecture to which a TCP/IP protocol suite is applied according to an embodiment of this application. As shown in FIG. 1, the communication apparatus includes software and hardware, where the software includes an application, a TCP layer, an IP layer, a data link layer, and a driver. The application corresponds to an application layer in the TCP/IP protocol suite. The TCP layer is a transport layer that uses TCP as a protocol. The IP layer is a network layer that uses IP as a protocol. The hardware includes a central processing unit (central processing unit, CPU), a memory, and a network interface card.

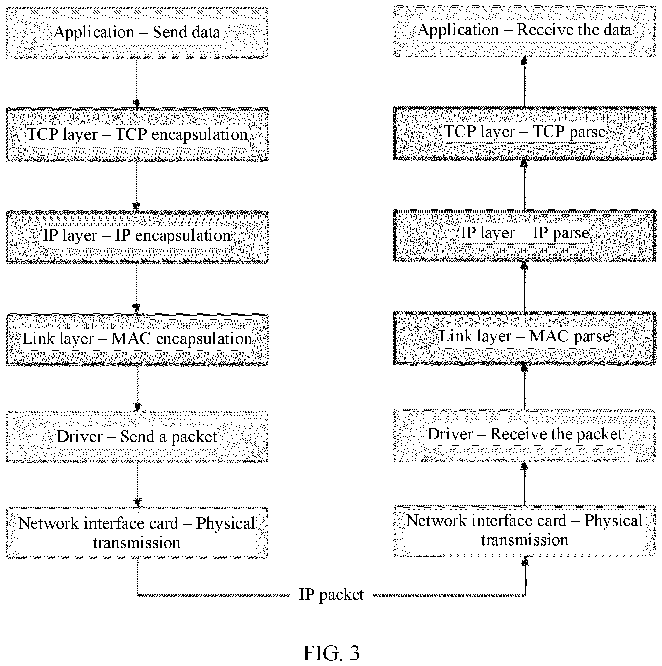

Refer to FIG. 2 and FIG. 3. FIG. 2 is a diagram of a structure of a packet generated based on a TCP/IP protocol suite according to an embodiment of this application. FIG. 3 is a diagram of packet transmission and parsing according to an embodiment of this application. As shown in FIG. 2 and FIG. 3, in a process in which a communication apparatus generates a packet, an application calls a protocol stack interface to transfer data to the TCP layer. The TCP layer divides, into a plurality of blocks, the data transferred by the application. Each data block is regarded as a payload (payload) in a packet. A TCP layer header is encapsulated before the payload. The IP layer continues to encapsulate an IP layer header before the TCP header. The IP layer header includes a source IP address and a destination IP address. The data link layer continues to encapsulate, before the IP layer header, a data link layer header including a source MAC address and a destination MAC address, to finally obtain a packet that needs to be sent to another communication apparatus. Then, the data link layer transfers the encapsulated packet to the driver, and the driver transfers the encapsulated packet to the network interface card. The network interface card sends, over a physical link, the encapsulated packet to another communication apparatus serving as a receive end.

After the communication apparatus serving as the receive end receives the packet, the driver first transfers the received packet to the data link layer, and then the data link layer parses the data link layer header in the packet to obtain the source MAC address and the destination MAC address in the data link layer header. Afterwards, the IP layer continues to parse the IP layer header in the packet to obtain the source IP address and the destination IP address in the IP layer header. Finally, the TCP layer continues to parse the TCP layer header in the packet, and transfers the finally obtained payload to the application.

As described above, in addition to the payload, the packet generated based on the current TCP/IP protocol suite further includes the TCP layer header, the IP layer header, and the data link layer header. The IP layer header mainly includes a source IP address (that is, an IP address of a transmit end) and a destination IP address (that is, an IP address of the receive end). When another transit node exists between two communication apparatuses, the transit node needs to implement packet transmission based on the source IP address and the destination IP address in the IP layer header, to transmit the packet to a communication apparatus serving as a receive end.

However, in some simple communication scenarios, for example, when a peer-to-peer connection is between the two communication apparatuses, there is no transit node between the two communication apparatuses. Therefore, packet transmission between the two communication apparatuses may be implemented without using the source IP address and the destination IP address. In this case, if the packet exchanged between the two communication apparatuses still carries the IP layer packet header, redundant content that does not work in packet transmission is carried in the packet. When a data volume of valid data transmitted between the communication apparatuses remains unchanged, a total volume of data transmitted between the communication apparatuses increases, thereby reducing a data transmission delay and increasing power consumption overheads of the communication apparatus.

In view of this, an embodiment of this application provides a data transmission method. When a communication connection established between two communication apparatuses is a data forwarding connection without using a network layer, a structure of a packet exchanged between the communication apparatuses is simplified, the packet does not carry a network layer header, and only a transport layer header and a data link layer header that are used to implement packet transmission are reserved, thereby reducing packet overheads, improving data transmission efficiency, and reducing power consumption of the communication apparatus.

The data transmission method provided in this embodiment of this application may be applied to a communication apparatus. For example, the communication apparatus may be, for example, a server, a smartphone (mobile phone), a personal computer (personal computer, PC), a notebook computer, a tablet computer, a smart television, a mobile Internet device (mobile internet device, MID), a wearable device, a virtual reality (virtual reality, VR) device, an augmented reality (augmented reality, AR) device, a wireless communication apparatus in industrial control (industrial control), a wireless communication apparatus in self driving (self driving), a wireless communication apparatus in remote medical surgery (remote medical surgery), a wireless communication apparatus in a smart grid (smart grid), a wireless communication apparatus in transportation safety (transportation safety), a wireless communication apparatus in a smart city (smart city), or a wireless communication apparatus in a smart home (smart home).

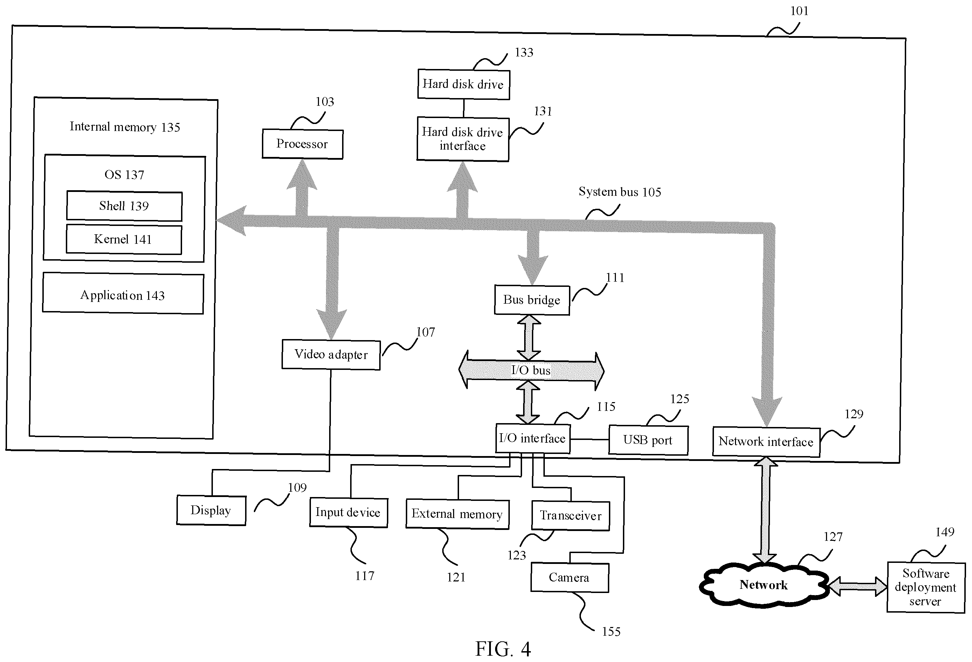

Refer to FIG. 4. FIG. 4 is a diagram of a structure of a communication apparatus 101 according to an embodiment of this application. As shown in FIG. 4, the communication apparatus 101 includes a processor 103, and the processor 103 is coupled to a system bus 105. The processor 103 may be one or more processors, and each processor may include one or more processor cores. A video adapter (video adapter) 107 may drive a display 109, and the display 109 is coupled to the system bus 105. The system bus 105 is coupled to an input/output (I/O) bus through a bus bridge 111. An I/O interface 115 is coupled to the I/O bus. The I/O interface 115 communicates with a plurality of I/O devices, such as an input device 117 (for example, a touchscreen), an external memory 121 (for example, a hard disk, a floppy disk, an optical disc, or a USB flash drive), a multimedia interface, a transceiver 123 (which may send and/or receive a radio communication signal), a camera 155 (which may capture static and dynamic digital video images), and an external USB port 125. Optionally, an interface connected to the I/O interface 115 may be a USB port.

The processor 103 may be any conventional processor, including a reduced instruction set computing (reduced instruction set Computing, RISC) processor, a complex instruction set computing (complex instruction set computing, CISC) processor, or a combination thereof. Optionally, the processor may be a dedicated apparatus, for example, an ASIC.

The communication apparatus 101 may communicate with a software deployment server 149 by using the network interface 129. For example, the network interface 129 is a hardware network interface, for example, a network interface card. A network 127 may be an external network such as the Internet, or an internal network such as the Ethernet or a virtual private network (virtual private network, VPN). Optionally, the network 127 may alternatively be a wireless network, for example, a Wi-Fi network or a cellular network.

A hard disk drive interface 131 is coupled to the system bus 105. A hardware drive interface is connected to a hard disk drive 133. An internal memory 135 is coupled to the system bus 105. Data running in the internal memory 135 may include an operating system (OS) 137, an application 143, and a schedule table of the communication apparatus 101.

The operating system includes a shell 139 and a kernel (kernel) 141. The shell 139 is an interface between a user and a kernel of the operating system. The shell is the outermost layer of the operating system. The shell manages interaction between the user and the operating system: waiting for an input from the user, interpreting input from the user to the operating system, and processing various output results of the operating system.

The kernel 141 includes parts that are in the operating system and that are used to manage a memory, a file, a peripheral, and a system resource. The kernel 141 directly interacts with hardware. The kernel of the operating system usually runs a process, provides inter-process communication, and provides functions such as CPU time slice management, interruption, memory management, and I/O management.

For example, when the communication apparatus 101 is a smartphone, the application 143 includes a program related to instant messaging. In an embodiment, when the application 143 needs to be executed, the communication apparatus 101 may download the application 143 from the software deployment server 149.

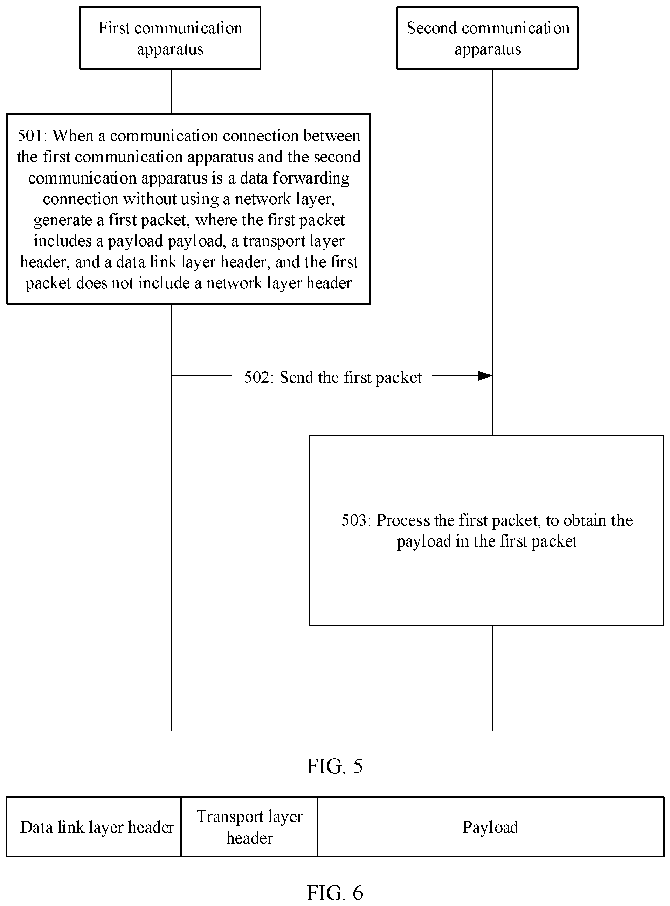

Refer to FIG. 5. FIG. 5 is a schematic flowchart of a data transmission method according to an embodiment of this application. As shown in FIG. 5, the data transmission method includes the following steps 501 to 503.

Step 501: When a communication connection between a first communication apparatus and a second communication apparatus is a data forwarding connection without using a network layer, the first communication apparatus generates a first packet, where the first packet includes a payload payload, a transport layer header, and a data link layer header, and the first packet does not include a network layer header.

In this embodiment, the data forwarding connection without using the network layer may specifically be a peer-to-peer (peer-to-peer, P2P) connection or a star connection. The peer-to-peer connection means that two communication apparatuses are directly connected without using another intermediate apparatus. For example, a smartphone is directly connected to a notebook computer through Wi-Fi without using an intermediate apparatus such as a router or a switch; or two smartphones are directly connected by using a near-field communication (Near Field Communication, NFC) technology, a Bluetooth technology, a ZigBee (ZigBee) technology, an infrared technology, or Wi-Fi.

The star connection means that two communication apparatuses are both connected to a same intermediate apparatus, and the intermediate apparatus implements data forwarding based on MAC addresses of the two communication apparatuses. For example, two servers are both connected to a same layer 2 switch; or two smartphones are both connected to a same wireless router.

In conclusion, when the communication connection between the first communication apparatus and the second communication apparatus is the data forwarding connection without using the network layer, the packet exchanged between the first communication apparatus and the second communication apparatus does not need to be forwarded based on an IP address in the network layer header.

In this case, the first packet generated by the first communication apparatus includes only the payload, the transport layer header, and the data link layer header, and the first packet does not include the network layer header. Specifically, refer to FIG. 6. FIG. 6 is a diagram of a structure of a first packet according to an embodiment of this application. As shown in FIG. 6, the first packet includes only two packet headers: the transport layer header and the data link layer header, and does not include the network layer header.

Specifically, because the first packet includes only the transport layer header and the data link layer header and does not include the network layer header, the first packet does not include fields such as a source IP address, a destination IP address, a checksum, and a TTL in the network layer header. Specifically, forwarding of the first packet no longer depends on the source IP address and the destination IP address. In addition, because the connection between the first communication apparatus and the second communication apparatus is usually short range communication, reliability of the first packet in a transmission process can be ensured. Therefore, the first packet does not need to carry the checksum to check accuracy of the first packet. In addition, because there is no intermediate apparatus or only one intermediate apparatus between the first communication apparatus and the second communication apparatus, the first packet does not need to carry the TTL to avoid cyclic reception and transmission of the packet in a network.

Optionally, the first communication apparatus may determine, in a plurality of manners, whether the connection between the first communication apparatus and the second communication apparatus is the data forwarding connection without using the network layer.

In a possible implementation, the first communication apparatus may determine a network type of an interface that is of the first communication apparatus and that is connected to the second communication apparatus, to determine whether the connection between the first communication apparatus and the second communication apparatus is the data forwarding connection without using the network layer.

For example, based on the network type of the interface that is of the first communication apparatus and that is connected to the second communication apparatus being a peer-to-peer connection, the first communication apparatus determines that the communication connection between the first communication apparatus and the second communication apparatus is the data forwarding connection without using the network layer. The interface that is of the first communication apparatus and that is connected to the second communication apparatus may be, for example, a physical interface or a logical interface.

In another possible implementation, the first communication apparatus may determine a relationship between an IP address of the first communication apparatus and an IP address of the second communication apparatus, to determine whether the connection between the first communication apparatus and the second communication apparatus is the data forwarding connection without using the network layer.

For example, based on the IP address of the first communication apparatus and the IP address of the second communication apparatus being in a same broadcast domain, the first communication apparatus determines that the communication connection between the first communication apparatus and the second communication apparatus is the data forwarding connection without using the network layer. It may be understood that, when the IP address of the first communication apparatus and the IP address of the second communication apparatus are in the same broadcast domain, the first communication apparatus and the second communication apparatus are actually located in the same local area network (for example, the first communication apparatus and the second communication apparatus are connected to a same wireless router), and data forwarding between the first communication apparatus and the second communication apparatus can be implemented by using MAC addresses without using the network layer.

The foregoing describes a plurality of manners in which the first communication apparatus determines the connection type. In actual application, the first communication apparatus may also determine, in another manner, whether the connection between the first communication apparatus and the second communication apparatus is the data forwarding connection without using the network layer. This is not specifically limited in this embodiment.

Step 502: The first communication apparatus sends the first packet to the second communication apparatus over the communication connection.

Because the communication connection between the first communication apparatus and the second communication apparatus is the data forwarding connection without using the network layer, packet transmission can also be implemented even if the first packet does not include the network layer header, that is, does not include the IP addresses of the first communication apparatus and the second communication apparatus.

In other words, when the first packet does not include the network layer header, the first communication apparatus can also normally send the first packet to the second communication apparatus, and the second communication apparatus can normally receive the first packet sent by the first communication apparatus.

Step 503: The second communication apparatus processes the first packet, to obtain the payload in the first packet.

After the second communication apparatus receives the first packet, the second communication apparatus may sequentially parse the data link layer header and the transport layer header in the first packet, finally obtain the payload in the first packet through parsing, and transfer the payload in the first packet to an application that is on the second communication apparatus and that exchanges data with the first communication apparatus.

In this embodiment, when a communication connection established between two communication apparatuses is a data forwarding connection without using a network layer, a structure of a packet exchanged between the communication apparatuses is simplified, the packet does not carry a network layer header, and only a transport layer header and a data link layer header that are used to implement packet transmission are reserved, thereby reducing packet overheads, improving data transmission efficiency, and reducing power consumption of the communication apparatus.

For ease of understanding, the following specifically describes a structure of the first packet.

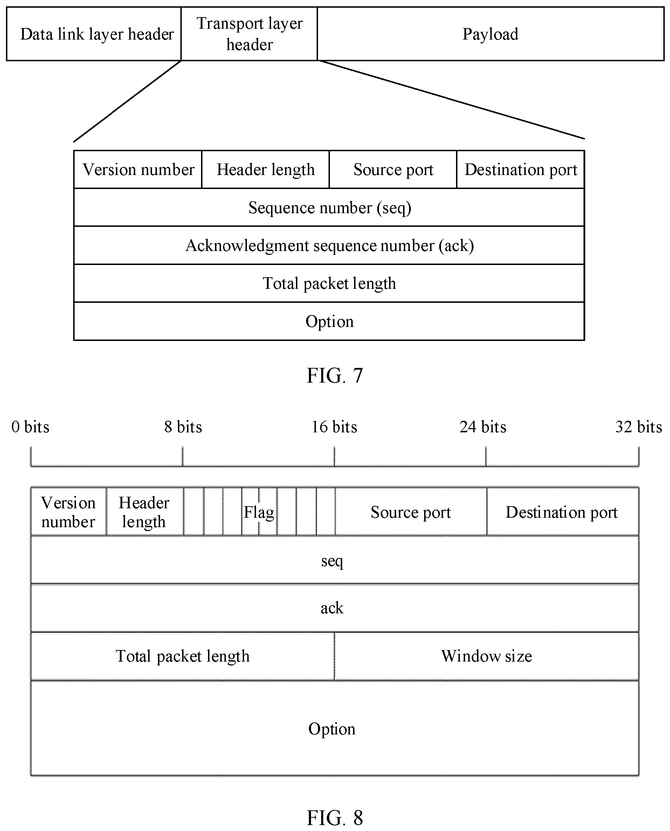

For example, refer to FIG. 7. FIG. 7 is a diagram of a structure of a transport layer header according to an embodiment of this application. As shown in FIG. 7, the transport layer header in the first packet includes a plurality of the following fields: a version number, a header length, a source port, a destination port, a sequence number (sequence number, seq), an acknowledgment sequence number (acknowledgment number, ack), a total packet length, and an option. Functions of the fields in the transport layer header are as follows:

Version number: is used for protocol version evolution. Different versions of protocols have different formats. During communication, communication apparatuses may negotiate, based on a version number field, a version of protocol supported by the communication apparatuses. For example, the version number may be 0, 1, 2, or the like.

Header length: Because the transport layer header includes a fixed-length header field and a variable-length option field, the header length may be a total length of a fixed-length part and a variable-length part. The header length minus a length of a fixed part is a length of an option. The length of the option may be 0. For example, it is assumed that the length of the fixed part in the transport layer header is 16 bytes. When a header length of a packet is 16, it indicates that there is no option field. When a header length of a packet is 20 bytes, it indicates that there is a 4-byte option field.

Source port: means a source port number. The source port number is similar to a TCP/UDP port number, and is used to enable a plurality of applications on a same communication apparatus to simultaneously communicate according to a same protocol.

Destination Port: means a destination port number. The destination port number is similar to a TCP/UDP port number, and is used to enable a plurality of applications on a same communication apparatus to simultaneously communicate according to a same protocol. Generally, when a communication apparatus sends data, a source port is a port number of the local apparatus, and a destination port is a port number of a peer apparatus.

Seq: indicates a data sequence number. A communication apparatus serving as a data transmit end numbers each byte of data, and seq in a packet is a number of a 1^{st} byte of a payload. If the packet does not include the payload, seq is kept as a seq number of a final byte of a payload in a previous packet.

For example, after the connection is established between the first communication apparatus and the second communication apparatus, the first communication apparatus sets initial seq to 1000, and the first communication apparatus sends, to the second communication apparatus, a 1^{st} packet whose payload length is 100 bytes. Seq in the packet is 1000, to indicate that seq of a 1^{st} byte in the payload is 1000. Then, the first communication apparatus sends, to the second communication apparatus, a 2^{nd} packet whose payload length is 0. Seq in the packet is 1100, to indicate a number of a final byte of the payload in the previous packet. The current packet (the 2^{nd} packet) has no new load, and therefore seq does not increase.

Ack: indicates an acknowledgment sequence number of data. When receiving the payload sent by the transmit end, the communication apparatus serving as the receive end of the data sends acknowledgment information, and ack is used to indicate that all data before the ack number is successfully received.

For example, after the connection is established between the first communication apparatus and the second communication apparatus, the second communication apparatus receives a packet sent by the first communication apparatus, where seq in the packet is 1000, and a payload length of the packet is 100. In this case, the second communication apparatus returns a packet, where ack carried in the packet is 1101 to indicate that data before seq 1101 has been received.

Total packet length: indicates a total length of a current packet header and a packet payload.

Option: The option field is a reserved field for subsequent extension.

For example, refer to FIG. 8. FIG. 8 is another diagram of a structure of a transport layer header according to an embodiment of this application. As shown in FIG. 8, compared with the transport layer header shown in FIG. 7, the transport layer header in the embodiment corresponding to FIG. 8 further includes the following two fields: a flag bit and a window size. The flag bit indicates a flag used by the two communication apparatuses in a connection establishment or disconnection phase, for example, a handshake flag and a hand wave flag. A packet with a handshake flag is used to initiate a connection, and a packet with a hand wave flag is used to disconnect a connection. The window size is used to notify a peer communication apparatus of a size of a receive buffer on a local side, where a unit of the size of the receive buffer is kB.

In the transport layer header, fields of seq, ack, and the window size may be used to implement reliable transmission. Specifically, seq is used by the transmit end to mark sent data, and ack is used by the receive end to acknowledge that the data is successfully received. If the transmit end has not received ack for a long time, data retransmission is triggered, to ensure that the receive end successfully receives the data. The window size is used by the receive end to notify the transmit end of the size of the receive buffer. The following case is avoided: The transmit end sends excessive data, and therefore the receive end cannot keep up. The window size field is not mandatory. Adding this field is to avoid a case of discarding packets by the receive end due to an insufficient buffer.

In addition, FIG. 8 further provides an example of a length of each field in the transport layer header. Details are as follows:
Version number: 4 bits (bit), indicating a version number from 0 to 15.

Header length: 4 bits, where a value ranges from 0 to 15 and indicates a quantity of 4-bytes for the header length. For example, if the value of the header length is 15, it indicates that the header length is 15*4=60 bytes.

Flag bit: 8 bits. Available flag bits include a handshake flag and a hand wave flag. Each flag occupies a fixed bit. For example, the handshake flag is fixed at a 1^{st} bit of the 8 bits, and the hand wave flag is fixed at a 2^{nd} bit. If the 1^{st} bit is 1, it indicates that the packet carries the handshake flag; or otherwise, it indicates that the packet does not carry the handshake flag.

Source port: 8 bits, indicating a port number from 0 to 255.

Destination port: 8 bits, indicating a port number from 0 to 255.

Seq: 32 bits. The 32 bits can represent 4 GB data to prevent seq from being reversed in a short time.

Ack: 32 bits with a length same as the length of seq.

Total packet length: 16 bits. A theoretical value range is 0-65535. An actual value is not less than 16.

Window size: 16 bits. A value range is 0-65535. The window size is used to notify a peer end of a size of a receive buffer of a local end, where a unit of the window size is kB. For example, if a value of the window size is 500, it indicates that the size of the receive buffer of the local end is 500 kB.

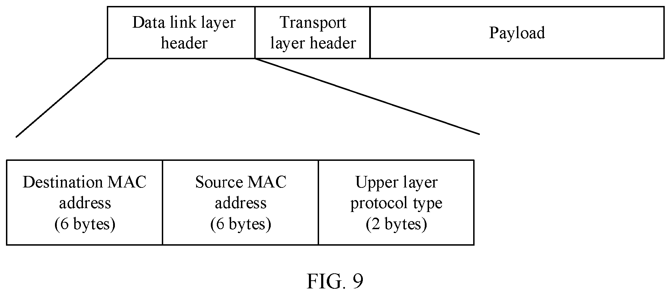

For example, refer to FIG. 9. FIG. 9 is a diagram of a structure of a data link layer header according to an embodiment of this application. As shown in FIG. 9, in the first packet, the data link layer header includes a plurality of the following fields: an upper layer protocol type, a source MAC address, and a destination MAC address. The upper layer protocol type indicates a protocol type corresponding to the transport layer header.

In this embodiment, a new protocol applied to the transport layer is used to replace both TCP and IP, and the new transport layer protocol is used to generate the foregoing transport layer header. For ease of description below, the new transport layer protocol proposed in this embodiment is named the minimalist transfer protocol (Minimalist Transfer Protocol, MinTP). Specifically, for the upper layer protocol type field in the data link layer header, a type value corresponding to the IP protocol is 0x0800, and a type value corresponding to MinTP is 0xa85a.

The foregoing describes a structure of a packet generated according to the new transport layer protocol (MinTP). For ease of understanding, the following describes in detail how to deploy and apply MinTP in the communication apparatus.

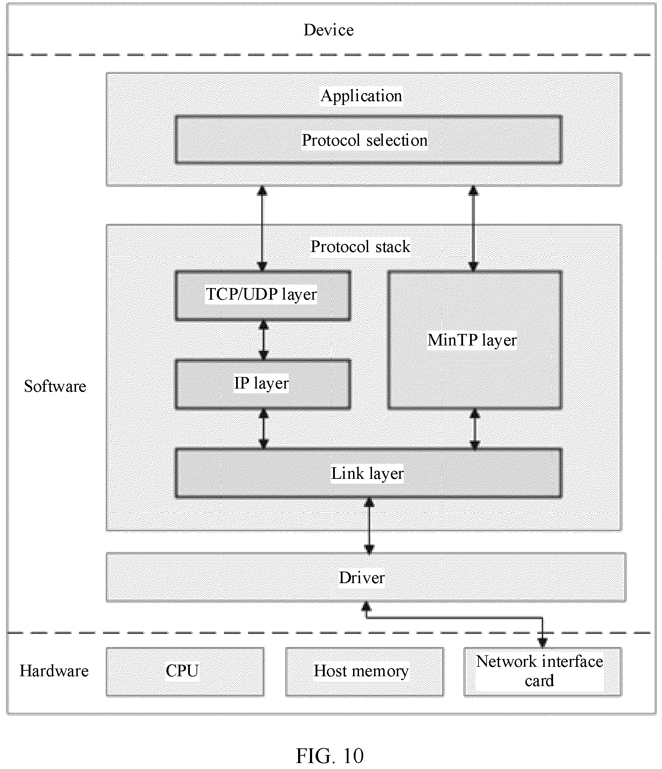

For example, refer to FIG. 10. FIG. 10 is a diagram of a system architecture according to an embodiment of this application. As shown in FIG. 10, in this embodiment, MinTP is added on the basis of an existing protocol stack. Correspondingly, the MinTP layer belongs to the transport layer, but the MinTP layer can assume original responsibilities of the TCP layer and the IP layer on a protocol hierarchy. In other words, the MinTP layer is responsible for dividing a large data block of an application into packets, transmitting the packets to a destination end, and ensuring reliability of a transmission process.

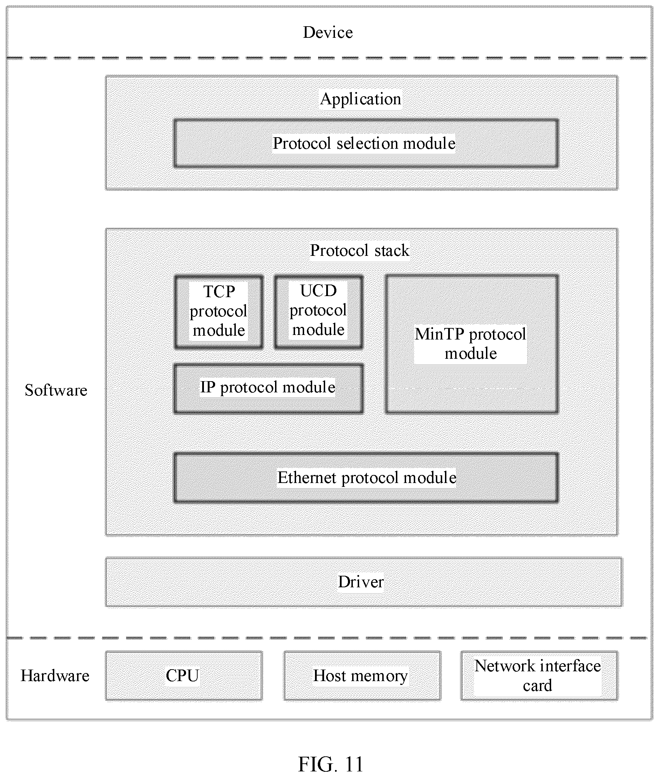

For example, refer to FIG. 11. FIG. 11 is a diagram of an implementation architecture according to an embodiment of this application. As shown in FIG. 11, to apply MinTP provided in this embodiment of this application to a device, in this embodiment of this application, a protocol selection module is newly added to an application, and a MinTP protocol module is newly added to a protocol stack. The MinTP protocol module is a transport layer module, for example, may be a protocol processing module corresponding to the transport layer header in the foregoing first packet.

The protocol selection module in the application is used to select a transport layer protocol based on a current service scenario and establish a data transmission connection. Specifically, if a current scenario is a scenario in which a network layer is not needed in data forwarding, for example, a peer-to-peer data transmission scenario, the protocol selection module selects the MinTP protocol and establishes a MinTP connection; or otherwise, the protocol selection module selects TCP or UDP and establishes a TCP connection or a UDP transmission channel. After the MinTP protocol is selected, the application transfers data to the MinTP protocol module, and the MinTP protocol module generates a packet based on the data transferred by the application.

Specifically, a software implementation of this embodiment is writing a kernel module to implement the MinTP protocol. The Linux operating system is used as an example. The Linux operating system provides a mechanism for writing a kernel module. A static kernel module or a dynamic kernel module may be written. The following embodiment describes a manner of writing a dynamic kernel module.

First, a module initialization function and a module deinitialization function are written according to a framework required by a Linux kernel module, and then a source file is compiled, in a manner of compiling the kernel module, into a kernel module that can be dynamically loaded. After writing of the kernel module is completed, an insmod command may be used to load the compiled kernel module. If the kernel module does not need to be used, an rmmod command is used to uninstall a loaded module.

Secondly, a MinTP protocol stack framework is added to the foregoing kernel module. A specific manner is: calling a kernel interface to register an AF_MINTP protocol suite (which belongs to a same level as an AF_INET protocol suite of TCP/IP) with a kernel socket framework, and calling the kernel interface to register a new protocol type ETH_MINTP with a kernel protocol list.

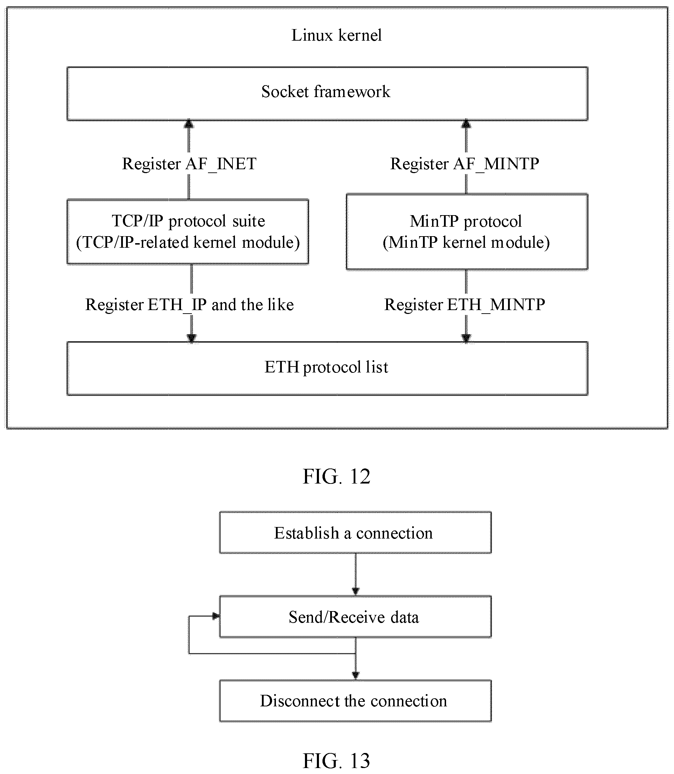

For example, refer to FIG. 12. FIG. 12 is a diagram of registering a MinTP protocol with a kernel according to an embodiment of this application. As shown in FIG. 12, the MinTP protocol is registered with the kernel by using an existing mechanism of the kernel, and another protocol in the kernel is also registered by using this mechanism.

After the AF_MINTP protocol is registered with the socket framework, a standard socket interface may be used to create a socket of an AF_MINTP type. An operation performed on the socket of the AF_MINTP type goes to a MinTP module in the kernel. After the ETH_MINTP protocol is registered, the kernel receives a packet of an ETH_MINTP type (a corresponding type value in this embodiment is 0xa85a), and sends the packet to the MinTP module for processing.

After the foregoing steps, the MinTP protocol can be deployed on a device, that is, a kernel module framework corresponding to the MinTP protocol is written. A standard socket programming interface can be provided upstream, and a packet of the ETH_MINTP type can be processed downstream.

The following describes in detail a specific procedure of data transmission according to the MinTP protocol.

Refer to FIG. 13. FIG. 13 is an overall schematic flowchart of data transmission according to an embodiment of this application. As shown in FIG. 13, before a communication apparatus performs data transmission, a connection needs to be first established between two communication apparatuses. After the connection is successfully established between the two communication apparatuses, data transmission or reception can be implemented (that is, one communication apparatus sends data, and the other communication apparatus receives data). A process of sending or receiving data between communication apparatuses may be cyclically performed for a plurality of times. If the two communication apparatuses no longer need to send or receive data, the connection is disconnected.

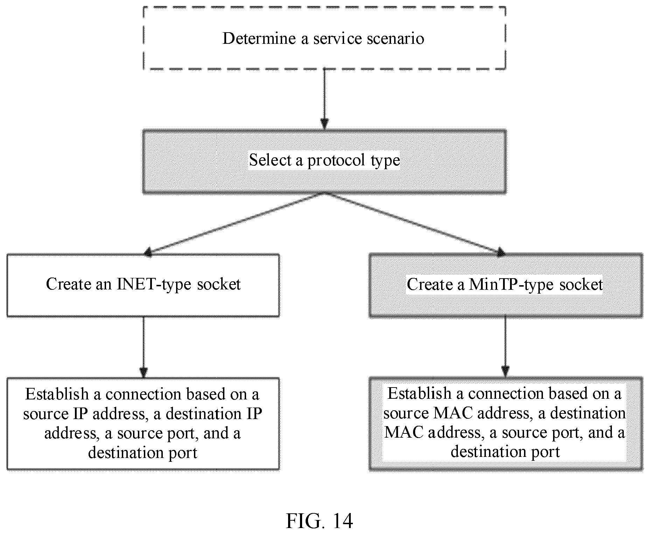

Refer to FIG. 14. FIG. 14 is a schematic flowchart of establishing connections by a communication apparatus according to different protocols according to an embodiment of this application. As shown in FIG. 14, before a connection is established, a protocol selection module in an application may determine whether a current service scenario is a scenario in which a network layer is not needed in data forwarding, and select a protocol type based on the current service scenario.

If the current service scenario is the scenario in which the network layer is not needed in data forwarding, the MinTP protocol is selected to be used to transmit data. Specifically, when the MinTP protocol is used to transmit data, a socket of a MinTP type may be first created, and then the connection is established by using a source MAC address, a destination MAC address, a source port, and a destination port. In other words, after a connection is established between a first communication apparatus and a second communication apparatus according to the MinTP protocol, the communication connection between the first communication apparatus and the second communication apparatus may be identified by using a source MAC address, a destination MAC address, a source port, and a destination port.

If the current service scenario is a scenario in which the network layer is needed in data forwarding, the TCP/IP protocol is selected to be used to transmit data. When the TCP/IP protocol is used to transmit data, a socket of an INET type may be first created, and then the connection is established by using a source IP address, a destination IP address, a source port, and a destination port.

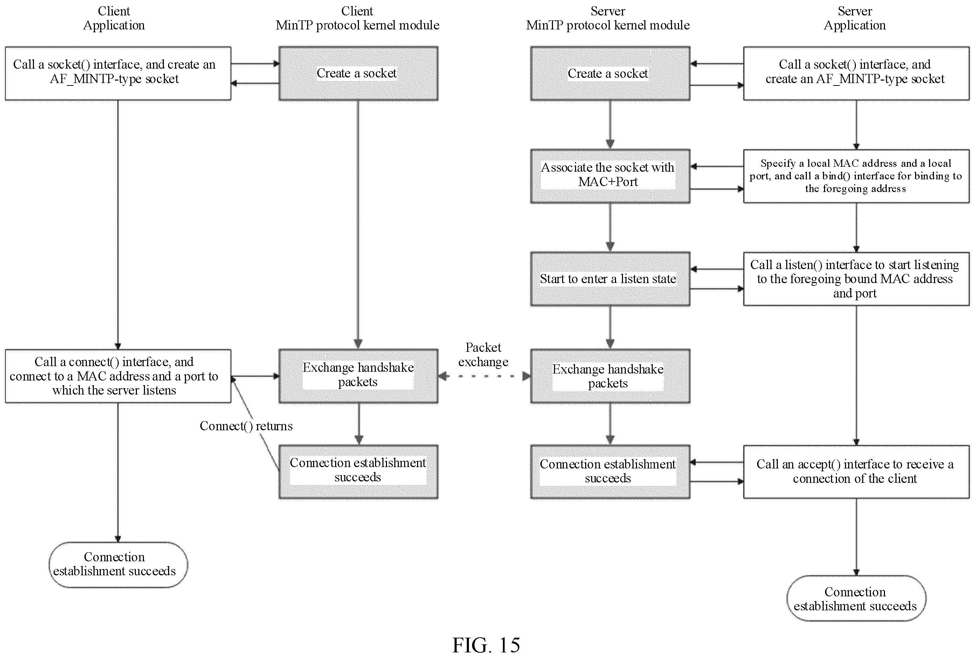

For example, refer to FIG. 15. FIG. 15 is a schematic flowchart of establishing a connection according to a MinTP protocol according to an embodiment of this application. FIG. 15 shows an operation procedure in which a user-mode program establishes a MinTP connection. A party that initiates a connection is a client (client), and a party that waits to be connected is a server (server). A specific procedure shown in FIG. 15 is described below.
(1) An application of the client and an application of the server respectively call socket() interfaces to create sockets of an AF_MINTP type, and a MinTP protocol kernel module of the client and a MinTP protocol kernel module of the server create data structures corresponding to the sockets.
(2) The application of the server calls a bind() interface to bind the socket to a local MAC address and a local port, and the MinTP protocol kernel module of the server associates a data structure of the socket with the MAC address and the port.
(3) The application of the server calls a listen() interface to listen to a new connection request, and the MinTP protocol kernel module of the server changes a status of the socket to a listen state and can receive a packet with a handshake request.
(4) The application of the client calls a connect() interface, attempts to connect to the server, and determines a location of the server based on the MAC address and the port. In addition, the MinTP protocol kernel module of the client starts to send a handshake packet and establishes a connection to the server through data exchange.
(5) After the MinTP protocol kernel module of the client completes exchange of handshake packets, the application of the client completes connection establishment.
(6) The application of the server calls an accept() interface to receive a connection request from the client. If the MinTP protocol kernel module of the server has a connection for completing exchange of handshake packets, connection information is returned to the application. In other words, an accept function returns the established connection. If no connection is established, the accept() function does not return.

The following describes in detail the process in which the connection is established between the client and the server by exchanging handshake packets.

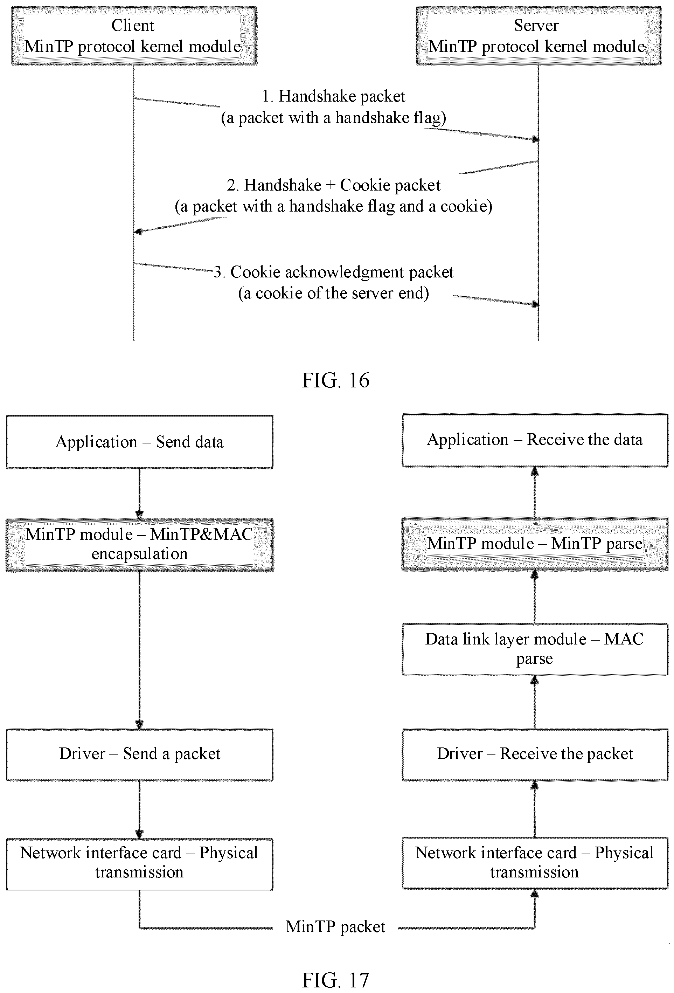

For example, refer to FIG. 16. FIG. 16 is a schematic flowchart of establishing a connection by exchanging handshake packets between a client and a server according to an embodiment of this application. The procedure shown in FIG. 16 includes the following three steps.

Step 1: The client first sends a handshake packet to the server, where the handshake packet is a MinTP-type packet that carries a handshake flag and whose payload length is 0. In the handshake packet, a source port may be a local random port that is not occupied, a destination port is a port to which the server listens, seq is a random value, ack is 0, a total packet length is 16, and a window size is a size, for example, 1024 kB, of a receive buffer that is created by a local MinTP protocol kernel module for the socket.

Step 2: After receiving the handshake packet, the server obtains a 32-bit cookie through calculation based on the source MAC address, the destination MAC address, the source port, and the destination port in the handshake packet, and a local key. The local key is a random number stored for a long time. Specifically, Cookie = Encryption algorithm (Source MAC address, Destination MAC address, Source port, Destination port, and Local key).

In addition, the server uses the cookie as a seq value of a packet, and constructs a handshake+cookie packet (that is, a handshake packet carrying the cookie), where a handshake flag is set for the packet, a source port is a port to which listening is locally performed, a destination port is the source port in the handshake packet received in step 1, ack is 1 plus seq of the handshake packet received in step 1, a total packet length is 16, and a window size is a size, for example, 1024 kB, of a receive buffer that is created by a local MinTP protocol kernel module for the socket.

Step 3: After receiving the handshake packet that carries the cookie and that is sent by the server, the client responds with a cookie acknowledgment packet, where a payload length of the cookie acknowledgment packet is also 0, an ack value is cookie+1, a seq value is the same as seq of the handshake packet in step 1, and a setting principle of another field is the same as that of the handshake packet in step 1.

In this way, after receiving the cookie acknowledgment packet, the server checks, based on the source MAC address, the destination MAC address, the source port, and the destination port in the packet, and the local key, whether the cookie is correct, that is, determine whether seq-1 in the packet is equal to the cookie calculated by the server. If seq-1 in the packet is equal to the cookie calculated by the server, the check on the cookie succeeds, the connection establishment succeeds, and a receive buffer is allocated for the new connection. If seq-1 in the packet is not equal to the cookie calculated by the server, the check on the cookie fails, the packet is directly discarded, and no new connection is generated.

After the connection is established between the client and the server, data may be transmitted between the client and the server based on the established connection.

For example, refer to FIG. 17. FIG. 17 is a schematic flowchart of packet exchange between a client and a server according to an embodiment of this application. As shown in FIG. 17, an application of a client may first send data to a MinTP protocol module of the client; then the MinTP protocol module performs MinTP encapsulation (that is, encapsulates a transport layer header) and MAC address encapsulation (that is, encapsulates a data link layer header) on the obtained data, and sends the encapsulated packet to a driver; and finally, the driver transmits the encapsulated packet to a network interface card of a server by using a network interface card.

For the server, a driver of the server sends the packet received by the network interface card to a data link layer module. The data link layer module parses the data link layer header in the packet, and determines, based on an upper layer protocol type field in the data link layer header, that a protocol type corresponding to the current packet is MinTP. Therefore, the link layer module transfers the packet to a MinTP protocol module. The MinTP protocol module parses the transport layer header in the packet, extracts data in a payload, and returns the data in the payload to an application.

It can be learned from FIG. 17 that, when the client serving as a data transmit end encapsulates the packet, the MinTP protocol module is responsible for encapsulation of both the transport layer header and the data link layer header, to bypass a data link layer, thereby reducing a program processing procedure, finally reducing a data transmission delay, and reducing processing resource overheads of the communication apparatus.

Specifically, because three pieces of content: the upper layer protocol type, a source MAC address, and a destination MAC address are actually encapsulated in the data link layer header, and the MinTP protocol module can obtain the source MAC address and the destination MAC address during connection establishment, the MinTP protocol module can replace the data link layer to complete encapsulation of the data link layer header.

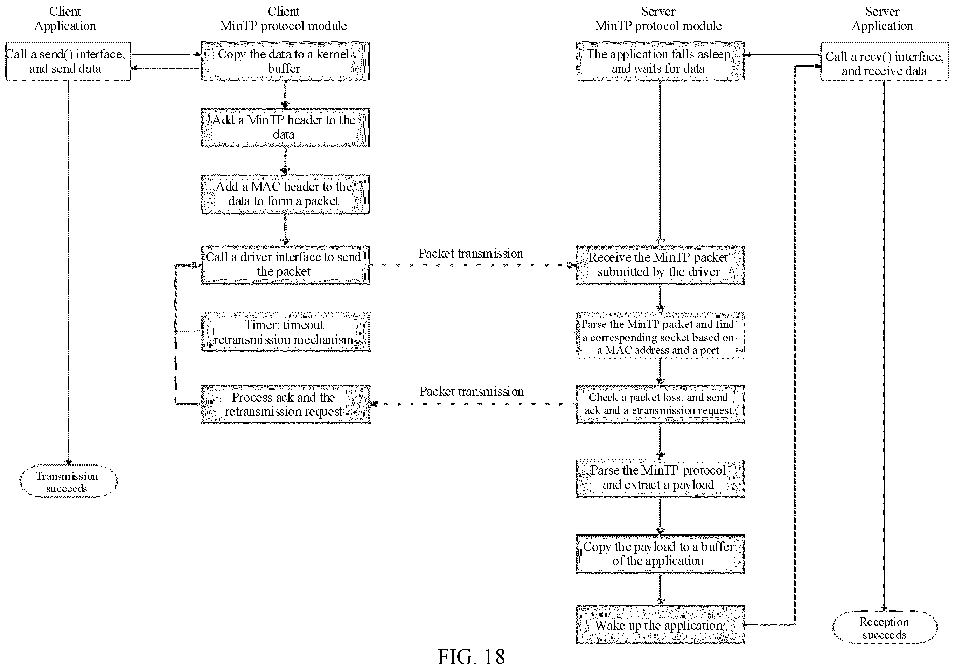

For details, refer to FIG. 18. FIG. 18 is another schematic flowchart of data exchange between a client and a server according to an embodiment of this application. In FIG. 18, a data exchange process between the client and the server is described in detail by using interaction between an application and a MinTP protocol module of the client, and an application and a MinTP protocol module of the server.

For the application of the client, the application of the client calls a send() interface to send data. After the data is copied to a kernel buffer, a function returns. Because MinTP is a reliable transmission protocol, after the data is copied to the kernel buffer, the MinTP protocol module of the client is responsible for reliably delivery of the data. Therefore, the application of the client may consider copying the data to the kernel buffer as successful sending the data.

For the MinTP protocol module of the client, the MinTP protocol module of the client is responsible for performing the following steps.

Step 1: After the application calls send(), the MinTP protocol module copies the data from a buffer of the application to a kernel buffer.

Step 2: The MinTP protocol module divides the data in the kernel buffer into blocks based on a packet size, and adds a MinTP protocol header (that is, a transport layer header) to each block.

Step 3: The MinTP protocol module further adds a MAC header (that is, a data link layer header) to each data block, where the MAC header includes a source MAC address, a destination MAC address, and an upper layer protocol type, the source MAC address and the destination MAC address come from an address bound when a connection is created, and a protocol type is a MinTP protocol number, that is, 0xa85a in this embodiment.

Step 4: After packets are encapsulated, the MinTP protocol module directly calls a driver interface to send the packets, to bypass a data link layer.

Step 5: Because MinTP is a reliable transmission protocol, and there is a timer, on a transmit end, responsible for timeout retransmission, each payload sent by the MinTP protocol module expects to receive a clear acknowledgment. If no ack is received within a specified time, data that is not acknowledged is retransmitted. For example, the client sends three packets, and seqs of the three packets are respectively 1-100, 101-200, and 201-300. However, a maximum ack value in a packet that is fed back by the server and that is received by the client is 201, to indicate that data with seqs of 1-200 has been received. If the client has not received ack 301 for a long time, the client retransmits a packet 3 carrying a payload with seqs of 201-300.

Step 6: The client further needs to process ack in a packet sent by the server. Specifically, if the client receives ack, the client may release the buffered data. It should be noted that the client buffers to-be-sent data. After the driver interface is called to send the packets in step 4, the buffered data is not released immediately because the data may be lost during transmission. The buffered data corresponding to the ack is released only after the ack sent by the server is received. For example, in the foregoing example, after receiving ack 201, the server may release buffered data with seqs of 1-200. In addition, the server may actively send a retransmission request. After detecting that seqs are discontinuous, the server may determine, based on information such as a timestamp, whether a packet loss occurs. If the server considers that a packet loss occurs, the server actively sends a retransmission request. A meaning of the retransmission request is retransmitting data with seq numbers from xxx to xxx. After receiving the retransmission request, the client retransmits the corresponding data.

For the application of the server, the application of the server calls a recv() interface to receive data. If the MinTP protocol module of the server has not received data, the application is blocked, and the application enters a sleep state. If the MinTP protocol module of the server has received data, the data is copied to the buffer of the application, and the application is woken up. In this case, the recv() interface returns.

For the MinTP protocol module of the server, the MinTP protocol module of the server is responsible for performing the following steps.

Step 1: After a user-mode program of the server calls recv(), the MinTP protocol module of the server checks whether there is currently data that has not been received by the application. If there is data that has not been received by the application, the data is copied to the buffer of the application, and recv() returns immediately. If there is no data that has not been received by the application, recv() is blocked, and the application falls asleep and waits for data.

Step 2: After a data link layer of the server receives a packet, if the packet is of a MinTP type, the data link layer sends the packet to the MinTP protocol module for processing.

Step 3: The MinTP protocol module of the server parses the packet, and finds a corresponding socket based on a source MAC address, a destination MAC address, a source port, and a destination port. A plurality of applications may create sockets at the same time and send and receive data at the same time. Therefore, the MinTP protocol module needs to send packets to different applications based on the sockets.

Step 4: After parsing the packet, the MinTP protocol module may infer, based on whether seqs are continuous and with reference to some other information, whether a packet loss occurs, and send a retransmission request if it is considered that a packet loss occurs. In addition, no matter whether a packet loss occurs, ack acknowledgment information is sent, and a packet loss request and the ack acknowledgment information may be sent by using a same packet.

Step 5: The MinTP protocol module extracts a payload from the packet, and reassembles the payload according to an order of seqs.

Step 6: The MinTP protocol module copies the reassembled payload from a kernel to the buffer of the application.

Step 7: The MinTP protocol module wakes up the application, and the application returns from the call of recv(), to obtain the payload reassembled by the MinTP protocol module.

The foregoing embodiments describe the data transmission method provided in embodiments of this application. The following describes a device for performing the foregoing data transmission method.

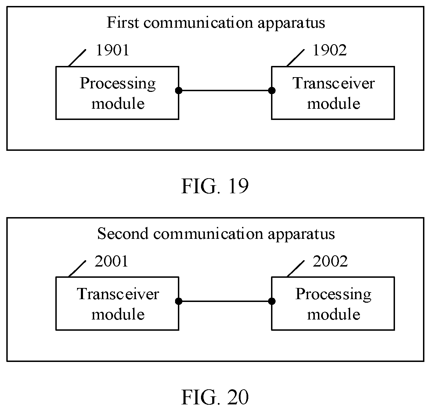

Refer to FIG. 19. FIG. 19 is a diagram of a structure of a first communication apparatus according to an embodiment of this application. As shown in FIG. 19, the first communication apparatus includes:
a processing module 1901, configured to generate a first packet, where the first packet includes a payload, a transport layer header, and a data link layer header, and the first packet does not include a network layer header; and
a transceiver module 1902, configured to send the first packet to a second communication apparatus over a communication connection, where the communication connection is a data forwarding connection without using a network layer.

In a possible implementation, the transport layer header includes a plurality of the following fields: a version number, a header length, a source port, a destination port, a sequence number, an acknowledgment sequence number, and a total packet length.

In a possible implementation, the data link layer header includes a plurality of the following fields: an upper layer protocol type, a source media access control MAC address, and a destination MAC address; and the upper layer protocol type indicates a protocol type corresponding to the transport layer header.

In a possible implementation, a header in the first packet does not include the following fields: a source IP address, a destination IP address, a checksum, and a time to live TTL.

In a possible implementation, the communication connection between the first communication apparatus and the second communication apparatus is identified by using a MAC address and a port number of the first communication apparatus and a MAC address and a port number of the second communication apparatus.

In a possible implementation, the processing module 1901 is specifically configured to: generate, by using a first transport layer module in the first communication apparatus, the payload, where the first transport layer module is a protocol processing module 1901 corresponding to the transport layer header; and encapsulate, by using the first transport layer module, the transport layer header and the data link layer header outside the payload based on the communication connection, to obtain the first packet.

In a possible implementation, the processing module 1901 is further configured to: based on a network type of an interface that is of the first communication apparatus and that is connected to the second communication apparatus being a peer-to-peer connection, determine, by the first communication apparatus, that the communication connection between the first communication apparatus and the second communication apparatus is the data forwarding connection without using the network layer.

In a possible implementation, the processing module 1901 is further configured to: based on an IP address of the first communication apparatus and an IP address of the second communication apparatus being in a same broadcast domain, determine, by the first communication apparatus, that the communication connection between the first communication apparatus and the second communication apparatus is the data forwarding connection without using the network layer.

Refer to FIG. 20. FIG. 20 is a diagram of a structure of a second communication apparatus according to an embodiment of this application. As shown in FIG. 20, the second communication apparatus includes:
a transceiver module 2001, configured to: when a communication connection between a first communication apparatus and the second communication apparatus is a data forwarding connection without using a network layer, receive, over the communication connection, a first packet sent by the first communication apparatus, where the first packet includes a payload, a transport layer header, and a data link layer header, and the first packet does not include a network layer header; and
a processing module 2002, configured to process the first packet, to obtain a payload in the first packet.

In a possible implementation, the transport layer header includes a plurality of the following fields: a version number, a header length, a source port, a destination port, a sequence number, an acknowledgment sequence number, and a total packet length.

In a possible implementation, the data link layer header includes a plurality of the following fields: an upper layer protocol type, a source MAC address, and a destination MAC address; and the upper layer protocol type indicates a protocol type corresponding to the transport layer header.

In a possible implementation, a header in the first packet does not include the following fields: a source IP address, a destination IP address, a checksum, and a TTL.

In a possible implementation, the communication connection between the first communication apparatus and the second communication apparatus is identified by using a MAC address and a port number of the first communication apparatus and a MAC address and a port number of the second communication apparatus.

In a possible implementation, the processing module 2002 is specifically configured to: transfer, by using a data link layer module in the second communication apparatus, the first packet to a second transport layer module in the second communication apparatus according to an upper layer protocol type indicated by the data link layer header, where the second protocol module is a protocol processing module 2002 corresponding to the transport layer header; and decapsulate, by using the second transport layer module, the first packet, to obtain the payload.

In a possible implementation, a network type of an interface that is of the first communication apparatus and that is used to connect to the second communication apparatus is a peer-to-peer connection.

In a possible implementation, an IP address of the first communication apparatus and an IP address of the second communication apparatus are in a same broadcast domain.

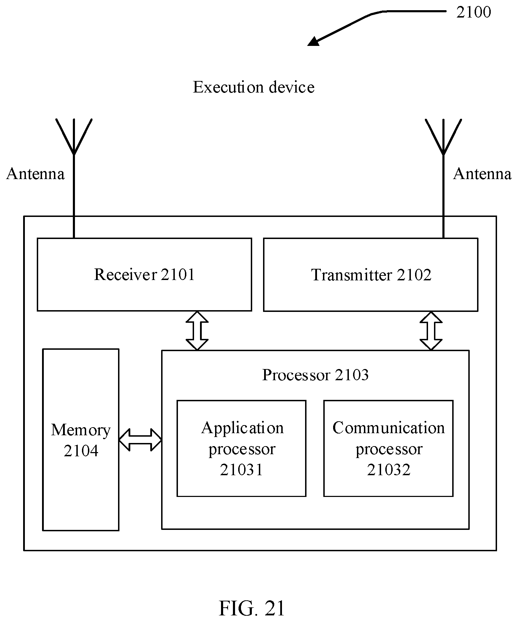

The following describes an execution device provided in embodiments of this application. Refer to FIG. 21. FIG. 21 is a diagram of a structure of an execution device according to an embodiment of this application. The execution device 2100 may be specifically represented as a mobile phone, a tablet, a notebook computer, an intelligent wearable device, a server, or the like. This is not limited herein. Specifically, the execution device 2100 includes a receiver 2101, a transmitter 2102, a processor 2103, and a memory 2104 (there may be one or more processors 2103 in the execution device 2100, and one processor is used as an example in FIG. 21). The processor 2103 may include an application processor 21031 and a communication processor 21032. In some embodiments of this application, the receiver 2101, the transmitter 2102, the processor 2103, and the memory 2104 may be connected through a bus or in another manner.

The memory 2104 may include a read-only memory and a random access memory, and provide instructions and data to the processor 2103. A part of the memory 2104 may further include a non-volatile random access memory (non-volatile random access memory, NVRAM). The memory 2104 stores a processor and operation instructions, an executable module or a data structure, or a subset thereof, or an extended set thereof. The operation instructions may include various operation instructions used to implement various operations.

The processor 2103 controls an operation of the execution device. In specific application, the components of the execution device are coupled together through a bus system. In addition to a data bus, the bus system may further include a power bus, a control bus, a status signal bus, and the like. However, for clear description, various types of buses in the figure are marked as the bus system.

The methods disclosed in embodiments of this application may be applied to the processor 2103, or may be implemented by the processor 2103. The processor 2103 may be an integrated circuit chip, and has a signal processing capability. In an implementation process, the steps in the foregoing methods can be implemented by using a hardware integrated logical circuit in the processor 2103, or by using instructions in a form of software. The processor 2103 may be a general-purpose processor, a digital signal processor (digital signal processor, DSP), a microprocessor, or a microcontroller. The processor 2103 may further include an application-specific integrated circuit (application-specific integrated circuit, ASIC), a field-programmable gate array (field-programmable gate array, FPGA) or another programmable logic device, a discrete gate or a transistor logic device, or a discrete hardware component. The processor 2103 may implement or perform the methods, the steps, and the logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 2104, and the processor 2103 reads information in the memory 2104 and completes the steps of the foregoing methods in combination with hardware of the processor.

The receiver 2101 may be configured to receive input digit or character information, and generate a signal input related to a related setting and function control of the execution device. The transmitter 2102 may be configured to output digital or character information through a first interface. The transmitter 2102 may be further configured to send instructions to a disk group through the first interface, to modify data in the disk group. The transmitter 2102 may further include a display device such as a display.

In this embodiment of this application, in a case, the processor 2103 is configured to perform the method in the embodiment corresponding to FIG. 5.

The electronic device provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, to enable a chip in the execution device to perform the rendering method described in the foregoing embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

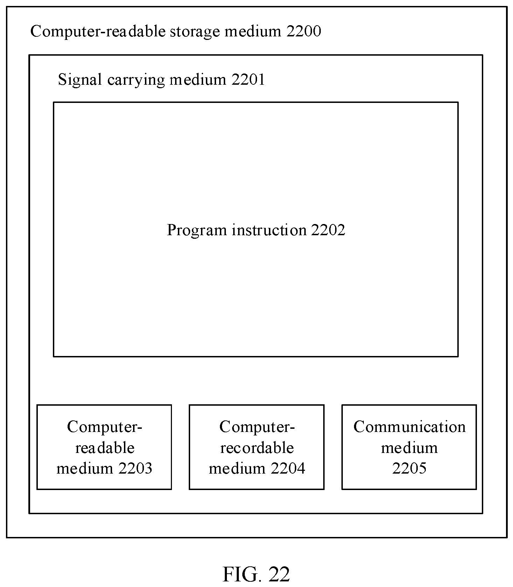

Refer to FIG. 22. FIG. 22 is a diagram of a structure of a computer-readable storage medium according to an embodiment of this application. This application further provides a computer-readable storage medium. In some embodiments, the method disclosed in FIG. 5 may be implemented as computer program instructions encoded in a machine-readable format on the computer-readable storage medium or encoded in another non-transitory medium or product.

FIG. 22 schematically shows a conceptual partial view of an example computer-readable storage medium arranged according to at least some embodiments shown herein, and the example computer-readable storage medium includes a computer program for executing a computer process on a computing device.

In an embodiment, the computer-readable storage medium 2200 is provided by using a signal carrying medium 2201. The signal carrying medium 2201 may include one or more program instructions 2202 that may provide the foregoing functions or some functions described in FIG. 5 when being run by one or more processors. In addition, the program instructions 2202 in FIG. 22 are also described as example instructions.

In some examples, the signal carrying medium 2201 may include a computer-readable medium 2203, for example, but not limited to, a hard disk drive, a compact disc (CD), a digital video disc (DVD), a digital tape, a memory, a ROM, or a RAM.

In some implementations, the signal carrying medium 2201 may include a computer-recordable medium 2204, for example, but not limited to, a memory, a read/write (R/W) CD, or an R/W DVD. In some implementations, the signal carrying medium 2201 may include a communication medium 2205, for example, but not limited to, a digital and/or analog communication medium (for example, an optical fiber, a waveguide, a wired communication link, or a wireless communication link). Therefore, for example, the signal carrying medium 2201 may be conveyed by the communication medium 2205 in a wireless form (for example, a wireless communication medium that complies with the IEEE 802 standard or another transmission protocol).

The one or more program instructions 2202 may be, for example, computer-executable instructions or logic implementation instructions. In some examples, the computing device of the computing device may be configured to provide various operations, functions, or actions in response to the program instruction 2202 transmitted to the computing device by using one or more of the computer-readable medium 2203, the computer-recordable medium 2204, and/or the communication medium 2205.

All or a part of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on a computer, the procedures or functions according to embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. A part or all of the units may be selected according to actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium and includes several instructions for instructing a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A data transmission method, comprising:
generating, by the first communication apparatus, a first packet, wherein the first packet comprises a payload payload, a transport layer header, and a data link layer header, and the first packet does not comprise a network layer header; and
sending, by the first communication apparatus, the first packet to a second communication apparatus over a communication connection, wherein the communication connection is a data forwarding connection without using a network layer.

2. The method according to claim 1, wherein the transport layer header comprises a plurality of the following fields: a version number, a header length, a source port, a destination port, a sequence number, an acknowledgment sequence number, and a total packet length.

3. The method according to claim 1 or 2, wherein the data link layer header comprises a plurality of the following fields: an upper layer protocol type, a source media access control MAC address, and a destination MAC address; and
the upper layer protocol type indicates a protocol type corresponding to the transport layer header.

4. The method according to any one of claims 1 to 3, wherein a header in the first packet does not comprise the following fields: a source Internet protocol IP address, a destination IP address, a checksum, and a time to live TTL.

5. The method according to any one of claims 1 to 4, wherein the communication connection is identified by using a MAC address and a port number of the first communication apparatus and a MAC address and a port number of the second communication apparatus.

6. The method according to any one of claims 1 to 5, wherein the generating, by the first communication apparatus, the first packet comprises:
generating, by a first transport layer module in the first communication apparatus, the payload, wherein the first transport layer module is a protocol processing module corresponding to the transport layer header; and
encapsulating, by the first transport layer module, the transport layer header and the data link layer header outside the payload based on the communication connection, to obtain the first packet.

7. The method according to any one of claims 1 to 6, wherein
a network type of an interface that is of the first communication apparatus and that is used to establish the communication connection to the second communication apparatus is a peer-to-peer connection.

8. The method according to any one of claims 1 to 6, wherein an IP address of the first communication apparatus and an IP address of the second communication apparatus are in a same broadcast domain.

9. A data transmission method, comprising:
when a communication connection between a first communication apparatus and a second communication apparatus is a data forwarding connection without using a network layer, receiving, by the second communication apparatus over the communication connection, a first packet sent by the first communication apparatus, wherein the first packet comprises a payload, a transport layer header, and a data link layer header, and the first packet does not comprise a network layer header; and
processing, by the second communication apparatus, the first packet, to obtain the payload in the first packet.

10. The method according to claim 9, wherein the transport layer header comprises a plurality of the following fields: a version number, a header length, a source port, a destination port, a sequence number, an acknowledgment sequence number, and a total packet length.

11. The method according to claim 9 or 10, wherein the data link layer header comprises a plurality of the following fields: an upper layer protocol type, a source MAC address, and a destination MAC address; and
the upper layer protocol type indicates a protocol type corresponding to the transport layer header.

12. The method according to any one of claims 9 to 11, wherein a header in the first packet does not comprise the following fields: a source IP address, a destination IP address, a checksum, and a TTL.

13. The method according to any one of claims 9 to 12, wherein the communication connection between the first communication apparatus and the second communication apparatus is identified by using a MAC address and a port number of the first communication apparatus and a MAC address and a port number of the second communication apparatus.

14. The method according to any one of claims 9 to 13, wherein the processing, by the second communication apparatus, the first packet comprises:
transferring, by a data link layer module in the second communication apparatus, the first packet to a second transport layer module in the second communication apparatus according to an upper layer protocol type indicated by the data link layer header, wherein the second protocol module is a protocol processing module corresponding to the transport layer header; and
decapsulating, by the second transport layer module, the first packet, to obtain the payload.

15. The method according to any one of claims 9 to 14, wherein that the communication connection between the first communication apparatus and the second communication apparatus is the data forwarding connection without using the network layer specifically comprises:
a network type of an interface that is of the first communication apparatus and that is used to connect to the second communication apparatus is a peer-to-peer connection.

16. The method according to any one of claims 9 to 14, wherein that the communication connection between the first communication apparatus and the second communication apparatus is the data forwarding connection without using the network layer specifically comprises:
an IP address of the first communication apparatus and an IP address of the second communication apparatus are in a same broadcast domain.

17. A communication apparatus, wherein the communication apparatus is a first communication apparatus and comprises:
a processing module, configured to generate a first packet, wherein the first packet comprises a payload, a transport layer header, and a data link layer header, and the first packet does not comprise a network layer header; and
a transceiver module, configured to send the first packet to a second communication apparatus over a communication connection, wherein the communication connection is a data forwarding connection without using a network layer.

18. The apparatus according to claim 17, wherein the transport layer header comprises a plurality of the following fields: a version number, a header length, a source port, a destination port, a sequence number, an acknowledgment sequence number, and a total packet length.

19. The apparatus according to claim 17 or 18, wherein the data link layer header comprises a plurality of the following fields: an upper layer protocol type, a source media access control MAC address, and a destination MAC address; and
the upper layer protocol type indicates a protocol type corresponding to the transport layer header.

20. The apparatus according to any one of claims 17 to 19, wherein a header in the first packet does not comprise the following fields: a source IP address, a destination IP address, a checksum, and a time to live TTL.

21. The apparatus according to any one of claims 17 to 20, wherein the communication connection is identified by using a MAC address and a port number of the first communication apparatus and a MAC address and a port number of the second communication apparatus.

22. The apparatus according to any one of claims 17 to 21, wherein the processing module is specifically configured to:
generate, by using a first transport layer module in the first communication apparatus, the payload, wherein the first transport layer module is a protocol processing module corresponding to the transport layer header; and
encapsulate, by using the first transport layer module, the transport layer header and the data link layer header outside the payload based on the communication connection, to obtain the first packet.

23. The apparatus according to any one of claims 17 to 22, wherein a network type of an interface that is of the first communication apparatus and that is used to establish the communication connection to the second communication apparatus is a peer-to-peer connection.

24. The apparatus according to any one of claims 17 to 22, wherein an IP address of the first communication apparatus and an IP address of the second communication apparatus are in a same broadcast domain.

25. A communication apparatus, wherein the communication apparatus is a second communication apparatus and comprises:
a transceiver module, configured to: when a communication connection between a first communication apparatus and the second communication apparatus is a data forwarding connection without using a network layer, receive, over the communication connection, a first packet sent by the first communication apparatus, wherein the first packet comprises a payload, a transport layer header, and a data link layer header, and the first packet does not comprise a network layer header; and
a processing module, configured to process the first packet, to obtain a payload in the first packet.

26. The apparatus according to claim 25, wherein the transport layer header comprises a plurality of the following fields: a version number, a header length, a source port, a destination port, a sequence number, an acknowledgment sequence number, and a total packet length.

27. The apparatus according to claim 25 or 26, wherein the data link layer header comprises a plurality of the following fields: an upper layer protocol type, a source MAC address, and a destination MAC address; and
the upper layer protocol type indicates a protocol type corresponding to the transport layer header.

28. The apparatus according to any one of claims 25 to 27, wherein a header in the first packet does not comprise the following fields: a source IP address, a destination IP address, a checksum, and a TTL.

29. The apparatus according to any one of claims 25 to 28, wherein the communication connection between the first communication apparatus and the second communication apparatus is identified by using a MAC address and a port number of the first communication apparatus and a MAC address and a port number of the second communication apparatus.

30. The apparatus according to any one of claims 25 to 29, wherein the processing module is specifically configured to:
transfer, by using a data link layer module in the second communication apparatus, the first packet to a second transport layer module in the second communication apparatus according to an upper layer protocol type indicated by the data link layer header, wherein the second protocol module is a protocol processing module corresponding to the transport layer header; and
decapsulate, by using the second transport layer module, the first packet, to obtain the payload.

31. The apparatus according to any one of claims 25 to 30, wherein a network type of an interface that is of the first communication apparatus and that is used to connect to the second communication apparatus is a peer-to-peer connection.

32. The apparatus according to any one of claims 25 to 30, wherein an IP address of the first communication apparatus and an IP address of the second communication apparatus are in a same broadcast domain.

33. A communication apparatus, comprising a memory and a processor, wherein the memory stores code, the processor is configured to execute the code, and when the code is executed, the apparatus performs the method according to any one of claims 1 to 16.

34. A computer storage medium, wherein the computer storage medium stores instructions; and when the instructions are executed by a computer, the computer is enabled to implement the method according to any one of claims 1 to 16.

35. A computer program product, wherein the computer program product stores instructions; and when the instructions are executed by a computer, the computer is enabled to implement the method according to any one of claims 1 to 16.
